# EUROPÄISCHE PATENTSCHRIFT

(11) **EP 0 703 515 B1**
(45) Veröffentlichungstag und Bekanntmachung des Hinweises auf die Patenterteilung: **22.12.1999**
(21) Anmeldenummer: 94114926.2
(22) Anmeldetag: 21.09.1994
(51) Int. Cl.: G05B 19/042

(54) **Verfahren zur Steuerung von Aggregaten im Tagesrhythmus und Tagesrhytmussteuerung**
Method for controlling aggregates by daily rhythms and daily rhythms control apparatus
Méthode de commande d'agrégats par des rythmes quotidiens et appareil de commande par rythmes quotidiens

(43) Veröffentlichungstag der Anmeldung: 27.03.1996
(73) Patentinhaber: REAG IT-Solutions AG, 3074 Muri b. Bern (CH)
(72) Erfinder: Richard, Hans, CH-3006 Bern (CH); Engel, Reto, CH-3074 Muri (CH)
(74) Vertreter: Troesch Scheidegger Werner AG

(56) Entgegenhaltungen:
- GB-A- 2 103 386
- GB-A- 2 202 973
- US-A- 4 293 915
- US-A- 4 677 541
- US-A- 4 922 407
- US-A- 5 278 771

## Beschreibung

Die vorliegende Erfindung betrifft ein Verfahren nach dem Oberbegriff von Anspruch 1 sowie eine Steuerung nach dem Oberbegriff von Anspruch 4 sowie deren Verwendungen.

Es ist bekannt, Aggregate, insbesondere Aggregate von Hausinstallationen oder von Betriebsinstallationen, wie beispielsweise die Antriebe von Fensterrollos bzw. -storen, Beleuchtungen, Türentriegelungsmechanismen, Klimageräten, etc. im Tagesrhythmus zu steuern. Dabei ist es üblich, die Tagesrhythmussteuerung im Wochentakt auszulegen, d.h. mit einem Sonntag, einem Samstag und fünf Arbeitstagen. Ergeben sich aber z.B. von Jahr zu Jahr wechselnd, andere Bedürfnisse der Tagestypuseinteilung, wie beispielsweise bedingt durch regionale Nichtarbeitstage, Betriebsferien, Betriebs-Nichtarbeitstage, etc., so muss jeweils mit hohem Aufwand sichergestellt werden, dass die erwähnten Aggregate den jeweiligen Echtzeitverhältnissen entsprechend, geändert angesteuert werden.

Wenn dabei im Rahmen der vorliegenden Beschreibung von Steuerfunktionen für Aggregate gesprochen wird, so handelt es sich grundsätzlich um Steuerfunktionen über die Zeitperiode eines Tages, wie beispielsweise An- und Abschalten der Beleuchtung und weiter, entweder um Steuerfunktionen, im Sinne einer "open-loop"-Aggregatssteuerung oder im Sinne einer Führungsfunktion bei einer "closed-loop"-Führungsregelung der erwähnten Aggregate.

Aus der US-A-4 677 541 ist es bekannt, an einer benutzerprogrammierbaren Uhr Ereignisse für jeweils 24 h und eine Woche zu programmieren.

Weiter geht die GB-A-202 973 davon aus, dass es nachteilig sei, Aggregate eingangs genannter Art auf der Basis täglicher Programmierung zu steuern. Dies, weil dabei eine Umprogrammierung in Intervallen während des Jahres notwendig sei. Daraufhin wird in dieser Schrift ein vorgegebenes Jahresprogramm vorgeschlagen, das jeweilige Tagesprogramm wird entsprechend dem Jahresprogramm ermittelt, welch letzteres in ein EPROM geladen wird.

Es ist Aufgabe der vorliegenden Erfindung, ausgehend von einem Verfahren bzw. einer Steuerung letztgenannter Art, den zu treibenden Aufwand wesentlich zu reduzieren, sei dies bedienungsseitig, sei dies installationsseitig.

Dies wird erfindungsgemäss durch das Verfahren eingangs genannter Art gelöst, welches sich nach dem Kennzeichen von Anspruch 1 auszeichnet bzw. durch eine Steuerung, welche sich nach dem Kennzeichen von Anspruch 4 auszeichnet.

Sowohl das erfindungsgemässe Verfahren wie auch die erfindungsgemässe Tagesrhythmussteuerung eignen sich insbesondere für die Ansteuerung von Aggregaten an Haus- bzw. Betriebsinstallationen.

Um nicht Verwirrung zu schaffen, wird nachfolgend nicht von Feiertagen und Werktagen gesprochen, welche durch den Jahreskalender installations- bzw. betriebsunabhängig festgelegt sind, sondern es wird grundsätzlich von "Arbeitstagen" und "Nichtarbeitstagen" gesprochen.

Im weiteren wird von "Datums" gesprochen für die kalendarische Bezeichnung von Tagen und von "Daten", im Sinne digitaler Daten.

Grundsätzlich werden den Datums einer gegebenen Zeitspanne, beispielsweise eines Jahres, Typuskennzeichen manuell zugeordnet, was höchst flexibel und ohne grossen Aufwand geschehen kann; darnach wird durch Vergleich eines Echtzeitdatums mit abgespeicherten, gekennzeichneten Datums festgestellt, welches Kennzeichen dem Echtzeitdatum zugeordnet ist; mit diesem Kennzeichen werden Steuerfunktionen für die Ansteuerung der Aggregate abgerufen bzw. ausgelöst.

Die Erfindung wird anschliessend anhand einer Figur erläutert, welche, schematisch in Form eines Funktionsblock-Diagrammes vereinfacht, eine erfindungsgemässe Tagesrhythmussteuerung darstellt, welche nach dem erfindungsgemässen Verfahren arbeitet.

An einem Echtzeitdatumsgenerator 1, intern taktgesteuert, oder, wie verbreitet zentral durch die Fernübertragung von Zeittaktsignalen gesteuert, werden ausgangsseitig 1A Echtzeitdatensignale EZD im Tagesrhythmus ausgegeben.

In einer Datumsspeichereinheit 3 sind die Datums einer bestimmten Zeitspanne, beispielsweise eines Jahres, in Speicherstellen 3a abgespeichert, am Ausgang 3A der Datumsspeichereinheit 3 sind Signale entsprechend den abgespeicherten Datums, AD in bekannter Art und Weise abrufbar.

Im weiteren ist eine Kennzeichenspeichereinheit 5 vorgesehen, worin in Speicherstellen 5a Kennzeichen, beispielsweise A, B, C ... abgespeichert sind, welche als Kennzeichensignale, KZ, am Ausgang 5A der Kennzeichenspeichereinheit 5 in bekannter Art und Weise ausgebbar sind.

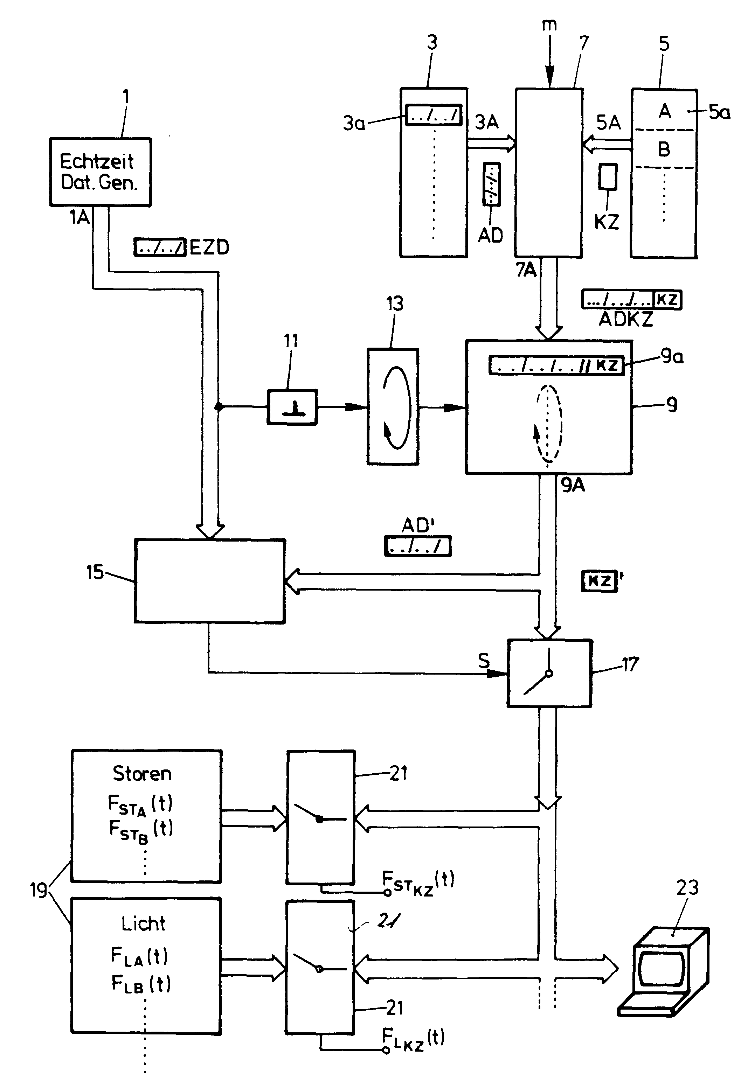

Eine Zuordnungseinheit 7 ist eingangsseitig sowohl mit dem Ausgang 3A der Datumsspeichereinheit 3, wie auch mit dem Ausgang 5A der Kennzeichenspeichereinheit 5 wirkverbunden. An der Zuordnungseinheit 7 können manuell, wie mit "m" schematisch dargestellt, jeder Datumsspeicherstelle 3a im Speicher 3 jede Kennzeichnung A .... C, generell mit KZ bezeichnet, zugeordnet werden, so dass am Ausgang 7A der Zuordnungseinheit 7 ein Signal erscheint, bestehend aus dem Inhalt einer angewählten Datumsspeicherstelle 3a, kombiniert mit der zugeordneten Kennzeichnung KZ aus einer Speicherstelle 5a der Kennzeichenspeichereinheit 5. Das am Ausgang 7a erscheinende, kombinierte Signal ist mit ADKZ in der Figur dargestellt. Dieses kombinierte Datum/Kennzeichensignal ADKZ wird einer "Gekennzeichnetdatum"-Speichereinheit 9 zugeführt und dort, wie dargestellt, in Speicherstellen 9a abgespeichert.

Nachdem mithin beispielsweise zu Beginn eines Jahres oder während des Jahres bei sich abzeichnenden Aenderungen für einen betrachteten Betrieb oder eine betrachtete Hausinstallation die Zuordnung von Datums und Kennzeichen vorgenommen worden ist, ist die Speichereinheit 9 mit den kombinierten Signalen bzw. Datensätzen Datum/Kennzeichen geladen.

Bei jedem Echtzeitdatumwechsel am Echtzeitdatumsgenerator-Ausgang 1A wird, wie schematisch mit der Auslöseimpulseinheit 11 dargestellt, eine Umlaufzyklussteuereinheit 13 ausgelöst, welche, umlaufend, alle Speicherstellen 9a der Speichereinheit 9 an deren Ausgang 9A legt.

Das Echtzeitdatumssignal EZD und hintereinander die den Ausgang 9A aufgeschalteten Datumsanteile AD' der Kombinationsdatensätze ADKZ werden an einer Vergleichseinheit 15 verglichen und die umlaufende Aufschaltung der Kombinationsdatensätze am Ausgang 9A dann abgebrochen, wenn Uebereinstimmung an der Vergleichseinheit 15 detektiert wird. Sie erzeugt bei der erwähnten Uebereinstimmung ausgangsseitig ein Steuersignal S, welches, wie mit der Durchschalteinheit 17 schematisch dargestellt, die dann am Ausgang 9A anliegende, dem übereinstimmend befundenen Datumssignal AD' zugeordnete Kennzeichnungssignal KZ' an den Ausgang der Durchschalteinheit 17 durchschaltet. Ausgangsseitig der Durchschalteinheit 17 wird die dem Echtzeitdatum entsprechende Kennzeichnung KZ' dazu verwendet, die Steuerfunktionen für die Aggregate auszulösen, welche dem mit der Kennzeichnung definierten Tagestyp entsprechen. In einer Funktionsspeichereinheit 19 sind, wie dargestellt, z.B. für Storen, Licht, etc. als Aggregate, die zugeordneten Steuerfunktionen dargestellt und zwar beispielsweise für den Storenbetrieb die Funktion F_{STA} entsprechend dem Kennzeichen A, F_{STB} entsprechend dem Kennzeichen B usw. und, entsprechend, für die weiteren anzusteuernden Aggregate.

Die am Ausgang der Durchschalteinheit 17 erscheinende Kennzeichnung KZ' steuert Auswahleinheiten 21 an, welch letztere entsprechend der steuernden Kennzeichnung KZ' an ihrem Ausgang dieser Kennzeichnung entsprechende Steuerfunktion F_{...} KZ auf das zugeordnete Aggregat, wie Storenantrieb, Beleuchtungssteuerung, etc. durchschalten.

Wie im weiteren in der Figur dargestellt, können die dem aktuellen Tag entsprechenden Kennzeichen KZ' für weitere Steuerzwecke direkt ausgewertet werden, wie beispielsweise für Ferienberechnungen, Lohnabrechnungen, etc. Dies ist durch Aufschaltung der Kennzeichnung KZ' an ein Computersystem 23 dargestellt.

Durch die vorliegende Erfindung wird der Vorteil erwirkt, dass, flexibel, den Kalendertagen Tagestypen entsprechend den Kennzeichen zugeordnet werden können und, entsprechend den zugeordneten Kennzeichen, Steuerfunktionen abgerufen werden können. Die Kennzeichen können beispielsweise folgende Tagestypen definieren:

Arbeitstag, Nichtarbeitstag, Arbeitstag vor Nichtarbeitstag, Nichtarbeitstag nach Arbeitstag, Nichtarbeitstag vor Arbeitstag, Arbeitstag nach Nichtarbeitstag, Arbeitstag zwischen Nichtarbeitstagen, Nichtarbeitstag zwischen Arbeitstagen, etc.

Dem Fachmann ergeben sich aus der vorgenommenen Beschreibung der erfindungsgemässen Steuerung bzw. des erfindungsgemässen Steuerverfahrens viele weitere Realisationsmöglichkeiten und Anwendungsmöglichkeiten.

## Patentansprüche

1. Verfahren zur Steuerung von Aggregaten im Tagesrhythmus, bei dem ein Echtzeit-Datumsignal (EZD) erzeugt wird und damit Tagesdaten zugeordnete Steuerfunktionen (F) ausgelöst werden, dadurch gekennzeichnet, dass
- Kennzeichen von Steuerfunktionengruppen manuell Tagesdatumangaben zugeordnet (7) und gemeinsam gespeichert werden (9a),
- jedes ein Echtzeitdatum identifizierendes Echtzeit-Datumsignal (FEZD) so lange mit gespeicherten Tagesdatumangaben sequentiell verglichen wird, bis Uebereinstimmung gefunden ist (15),
- mit dem Kennzeichen (KZ'), das der übereinstimmend befundenen Tagesdatumangabe zugeordnet ist, die durch das Kennzeichen identifizierten Steuerfunktionen (19) ausgelöst werden (21).

2. Verwendung des Verfahrens nach Anspruch 1 für die Steuerung von Haus- oder Betriebsinstallationsaggregaten, wie von Fensterstorenantrieben, Beleuchtungen, Türverriegelungsmechanismen, Klimageräten etc.

3. Verwendung des Verfahrens nach Anspruch 1 für die Auslösung unterschiedlicher Steuerfunktionen für mindestens drei der folgenden Tagestypen: Arbeitstag, Nichtarbeitstag, Arbeitstag vor Nichtarbeitstag, Nichtarbeitstag nach Arbeitstag, Nichtarbeitstag vor Arbeitstag, Arbeitstag nach Nichtarbeitstag, Arbeitstag zwischen Nichtarbeitstagen, Nichtarbeitstag zwischen Arbeitstagen.

4. Tagesrhythmussteuerung zur Ausführung des Verfahrens nach Anspruch 1 mit einem Echtzeit-Datumgeber (1) sowie einer durch das Ausgangssignal (1A) des Echtzeit-Datumgebers (1) angesteuerten Einrichtung zur Auslösung von Steuerfunktionen, dadurch gekennzeichnet, dass vorgesehen sind:
- eine Funktionsspeichereinheit (19), worin Steuerfunktionen Kennzeichen zugeordnet sind,
- eine Speichereinrichtung (9), worin manuell (m) Kennzeichen und Tagesdatumangaben einander zugeordnet abspeicherbar sind,
- eine Vergleichseinrichtung (15), welche eingangsseitig mit dem Ausgang des Echtzeit-Datumgebers (1) und demjenigen der Speichereinrichtung (9) wirkverbunden ist und die bei Übereinstimmung einer Tagesdatumangabe am Ausgang der Speichereinrichtung (9) und des Echtzeit-Datumsignals am Ausgang des Echtzeit-Datumgebers (1) ein Freigabesignal (S) an ihrem Ausgang abgibt,
- eine durch das Freigabesignal (S) freigegebene Durchschalteinheit (17), welche eingangsseitig mit dem Ausgang (9A) der Speichereinheit (9) wirkverbunden ist und, freigegeben, ausgangsseitig ein dem Kennzeichen (KZ) der als übereinstimmend befundenen Tagesdatumangabe entsprechendes Signal (KZ') abgibt, wobei das Ausgangssignal der Durchschalteinheit (17) die Auslösung derjenigen Steuerfunktionen ansteuert, die in der Funktionsspeichereinheit (19) dem Kennzeichen zugeordnet sind.

5. Anwendung der Steuerung nach Anspruch 4, bei der unterschiedliche Funktionen entsprechend unterschiedlicher Tagestypen gesteuert werden, wobei diese Tagestypen mindestens drei der folgenden umfassen:
Arbeitstag, Arbeitstag vor Nichtarbeitstag, Nichtarbeitstag nach Arbeitstag, Nichtarbeitstag, Nichtarbeitstag vor Arbeitstag, Arbeitstag zwischen zwei Nichtarbeitstagen, Nichtarbeitstag zwischen zwei Arbeitstagen.

6. Verwendung der Steuerung nach Anspruch 4 für die Steuerung von Aggregaten in Haus- oder Betriebsinstallationen.

## Claims

1. Process for controlling sets of equipment according to a daily rhythm, wherein a real time date signal (EZD) is generated and control functions (F) assigned to day's dates are triggered, characterised in that
- identifiers of control function groups are manually assigned to day's date indications (7) and stored in common (9a) ;
- each real time date signal (FEZD) identifying a real time date is sequentially compared with stored day's date indications until a match is found (15);
- the control functions (19) identified by the identifier are triggered (21) with the identifier (KZ') that is assigned to the day's date indication found to match.

2. Use of the process according to claim 1 to control sets of domestic or industrial equipment, such as window blind drive means, lighting systems, door bolting mechanisms, air conditioning apparatus, etc.

3. Use of the process according to claim 1 to trigger various control functions for at least three of the following types of day:
a working day, a non-working day, a working day before a non-working day, a non-working day after a working day, a non-working day before a working day, a working day after a non-working day, a working day between non-working days, a non-working day between working days.

4. Daily rhythm control means for carrying out the process according to claim 1 with a real time date generator (1) as well as a device, driven by the output signal (1A) of the real time date generator (1), for triggering control functions, characterised in that there are provided :
- a function storage unit (19) wherein control functions are assigned identifiers ;
- a storage device (9) wherein identifiers and day's date indications can be stored manually (m) assigned to one another ;
- a comparison device (15), which is operatively connected, on the input side, with the output of the real time date indicator (1) and that of the storage device (9), and which delivers an enabling signal (S) at its output in the event of a match between a day's date indication at the output from the storage device (9) and the real time date signal at the output from the real time date generator (1) ;
- a connection unit (17) enabled by the enabling signal (S), which is operatively connected, on the input side, with the output (9A) of the storage unit (9) and, when enabled, delivers, at the output side, a signal (KZ') corresponding to the identifier (KZ) of the day's date indication found to match, the output signal of the connection unit (17) controlling the triggering of those control functions that are assigned to the identifier in the function storage unit (19).

5. Application of the control means according to claim 4, wherein various functions are controlled according to various types of day, the said types of day including at least three of the following :
a working day, a working day before a non-working day, a non-working day after a working day, a non-working day, a non-working day before a working day, a working day between non-working days, a non-working day between working days.

6. Use of the control means according to claim 4 controlling sets of equipment in domestic or industrial installations.

## Revendications

1. Procédé pour commander des groupes suivant un rythme quotidien, selon lequel un signal de date en temps réel (EZD) est généré et des fonctions de commande (F) affectées à des dates sont ainsi déclenchées, caractérisé en ce que
- des identificateurs de groupes de fonctions de commande sont affectés manuellement (7) à des indications de date et sont mis en mémoire en commun (9a),
- chaque signal de date en temps réel (FEZD) identifiant une date en temps réel est comparé de manière séquentielle à des indications de date mises en mémoire jusqu'à ce qu'une concordance soit trouvée (15),
- à l'aide de l'identificateur (KZ') qui est affecté à l'indication de date concordante trouvée, les fonctions de commande (19) identifiées par l'identificateur sont déclenchées (21).

2. Utilisation du procédé selon la revendication 1 pour commander des groupes d'installations domestiques ou industrielles tels que des mécanismes de commande de stores de fenêtres, des éclairages, des mécanismes de verrouillage de portes, des climatiseurs, etc.

3. Utilisation du procédé selon la revendication 1 pour déclencher des fonctions de commande différentes pour au moins trois des catégories de jours suivantes :
jour de travail, jour sans travail, jour de travail précédant un jour sans travail, jour sans travail suivant un jour de travail, jour sans travail précédant un jour de travail, jour de travail suivant un jour sans travail, jour de travail entre des jours sans travail, jour sans travail entre des jours de travail.

4. Commande suivant un rythme quotidien pour mettre en oeuvre le procédé selon la revendication 1, comportant un générateur de date en temps réel (1) et un dispositif qui est commandé par le signal de sortie (1A) de celui-ci pour déclencher des fonctions de commande, caractérisée en ce qu'il est prévu :
- une unité de mémoire de fonctions (19) dans laquelle des fonctions de commande sont affectées à des identificateurs,
- un dispositif de mémoire (9) dans lequel on peut mettre en mémoire manuellement (m) des identificateurs et des indications de dates affectés les uns aux autres,
- un dispositif comparateur (15) qui est en relation fonctionnelle, côté entrée, avec la sortie du générateur de date en temps réel (1) et avec la sortie du dispositif de mémoire (9) et qui, lorsqu'il y a concordance entre une indication de date à la sortie du dispositif de mémoire (9) et le signal de date en temps réel à la sortie du générateur de date en temps réel (1), émet un signal de déblocage (S) à sa sortie,
- une unité d'interconnexion (17), débloquée par le signal de déblocage (S), qui est en relation fonctionnelle, côté entrée, avec la sortie (9A) de l'unité de mémoire (9) et qui, lorsqu'elle est débloquée, émet côté sortie un signal (KZ') correspondant à l'indicateur (KZ) de l'indication de date concordante trouvée, le signal de sortie de l'unité d'interconnexion (17) commandant le déclenchement des fonctions de commande qui sont affectées à l'identificateur dans l'unité de mémoire de fonctions (19).

5. Application de la commande selon la revendication 4, selon laquelle des fonctions différentes sont commandées en fonction de catégories de jours différentes, ces catégories de jours comprenant au moins trois des catégories suivantes :
jour de travail, jour de travail précédant un jour sans travail, jour sans travail suivant un jour de travail, jour sans travail, jour sans travail précédant un jour de travail, jour de travail entre deux jours sans travail, jour sans travail entre deux jours de travail.

6. Utilisation de la commande selon la revendication 4 pour commander des groupes dans des installations domestiques ou industrielles.
